Europäisches Patentamt

(19) **European Patent Office**

**Office européen des brevets**

(11) Numéro de publication: **0 181 663**

**A1**

(12) # DEMANDE DE BREVET EUROPEEN

(21) Numéro de dépôt: **85201720.1**

(22) Date de dépôt: **22.10.85**

(51) Int. Cl.⁴: **B 01 J 29/06**
**B 01 J 29/38**

(30) Priorité: **29.10.84 LU 85614**

(43) Date de publication de la demande:
**21.05.86 Bulletin 86/21**

(84) Etats contractants désignés:
**AT BE CH DE FR GB IT LI NL SE**

(71) Demandeur: **KATHOLIEKE UNIVERSITEIT LEUVEN**
**Naamsestraat, 22**
**B-3000 Leuven(BE)**

(72) Inventeur: **Jacobs, Pierre A.**
**Strijlandstraat, 104**
**B-1686 Gooik(BE)**

(72) Inventeur: **Tielen, Mia**
**Populierenlaan, 1**
**B-3202 Lubbeek, Linden(BE)**

(72) Inventeur: **Uytterhoeven, Jan B.**
**Rotspoelstraat, 361**
**B-3030 Leuven, Heverlee(BE)**

(74) Mandataire: **De Brabanter, Maurice et al,**
**Bureau VANDER HAEGHEN 63 Avenue de la Toison d'Or**
**B-1060 Bruxelles(BE)**

(54) **Procédé d'activation de catalyseurs siliceux.**

(57) Procédé d'activation de catalyseurs choisis parmi les zéolites à forte teneur en silice, les organosilicates, les silices polymorphes cristallines et les zéolites désactivés par traitement à la vapeur d'eau, dans lequel on traite thermiquement un catalyseur de ce type à l'aide de chlorure d'aluminium et d'un acide halohydrique.

Suivant l'invention, on fait agir sur le catalyseur du chlorure d'aluminium et de l'acide chlorhydrique, tous deux en phase gazeuse, à une température comprise entre environ 150 et 600°C dans un même réacteur et on élimine l'excès éventuel d'acide chlorhydrique gazeux à l'aide d'un gaz inerte.

EP 0 181 663 A1

PROCEDE D'ACTIVATION DE CATALYSEURS SILICEUX

La présente invention est relative à un procédé pour activer des catalyseurs siliceux choisis parmi les zéolites à forte teneur en silice, les organosilicates, les silices cristallines polymorphes et les zéolites désactivés par des traitements à la vapeur d'eau.

On sait que les catalyseurs du type zéolite à forte teneur en silice désactivés par déalumination de leur ossature peuvent être réactivés par re-alumination de la matrice siliceuse.

On admet généralement que la capacité d'échange ionique d'un zéolite cristallin dépend directement de sa teneur en aluminium. Si les cations nécessaires pour contrebalancer l'électronégativité du zéolite sont des protons, ils confèrent une activité catalytique remarquable au zéolite. Par ailleurs, les zéolites à forte teneur en silice ne contenant sensiblement pas d'aluminium possèdent de nombreuses propriétés et caractéristiques importantes et un degré élevé de stabilité structurelle, en sorte qu' ils peuvent être utilisés dans divers procédés catalytiques.

Comme exemples de tels zéolites à forte teneur en silice, on peut citer, entre autres, les suivants :
- ZSM-5 et ZSM-11 (brevet U.S.A. n° 3.709.979) ;
- ZSM-12 (brevet U.S.A. n° 3.832.449) ;
- ZSM-48 (brevet européen 23.089) ;

- organosilicates exempts d'aluminium ayant la structure du ZSM-5 (brevet U.S.A. n° 3.941.871) ;
- silices cristallines microporeuses ou organosilicates contenant de l'aluminium à l'état de traces (brevets U.S.A. n° 4.061.724, 4.073.865 et 4.104.294).

Plusieurs procédés ont été récemment proposés pour augmenter l'activité de ces zéolites ou silicates cristallins à faible teneur en alumine.

Ainsi, dans le brevet U.S.A. n° 4.427.786, on propose un procédé pour augmenter l'activité d'un zéolite cristallin ayant un rapport silice:alumine de plus de 100, ce procédé consistant à traiter le zéolite synthétisé à partir d'un mélange réactionnel contenant des ions volumineux, comme suit :

- calcination du zéolite à une température comprise entre 200 et 600°C ;
- mise en contact du zéolite calciné avec du fluorure de bore sec à une température de 0 à 100°C jusqu'à saturation ;
- élimination de l'excès de fluorure de bore du zéolite par purge ;
- hydrolyse du fluorure de bore adsorbé à l'aide d'une solution d'un sel d'ammonium pour obtenir le zéolite supporté, et
- re-calcination du zéolite supporté.

Par ailleurs, le brevet U.S.A. n° 4.438.215 décrit un procédé pour augmenter l'activité catalytique des mêmes zéolites synthétisés à partir d'un mélange réactionnel contenant des ions tétraalkylammonium, ce procédé consistant à :

- calciner le zéolite synthétisé à une température comprise entre 200 et 600°C ;
- traiter le zéolite calciné à l'aide de chlorure d'aluminium à une température de 100 à 600°C ;
- hydrolyser le chlorure d'aluminium adsorbé sur la

- 3 -

0181663

matière cristalline à l'aide d'eau ;

- calciner la matière cristalline en vue d'obtenir une activité catalytique améliorée.

Enfin, le brevet U.S.A. n° 4.444.900 décrit un procédé pour augmenter l'activité catalytique d'un zéolite cristallin poreux synthétique ayant un rapport silice : alumine de plus de 100, ce zéolite ayant été synthétisé en présence d'une diamine comme source de cations. Ce procédé comporte les phases suivantes :

- réaction du zéolite synthétisé avec une solution diluée 0,1 à 5 N d'acide fluorhydrique à une température de 0 à 30°C pendant moins de 60 minutes ;
- mise en contact du zéolite traité à l'acide fluorhydrique avec du chlorure d'aluminium à une température comprise entre 100 et 850°C ;
- traitement du zéolite mis en contact avec du chlorure d'aluminium, à l'aide d'une solution d'un sel d'ammonium ;
- calcination de la matière obtenue.

Les procédés connus d'amélioration de l'activité catalytique de zéolites, sommairement décrits ci-dessus, nécessitent des phases multiples comportant notamment des traitements de calcination et des réactions en phase liquide.

La présente invention concerne un procédé d'activation des catalyseurs des types susmentionnés, qui peut être mis en oeuvre dans un seul réacteur et dans lequel l'activation s'effectue à l'aide de réactifs peu coûteux en phase gazeuse.

Il est à noter que l'isomérisation et l'hydrocraquage de n-paraffines, en particulier du n-décane, par un mécanisme bifonctionnel, ont été étudiés sur des zéolites ayant des rapports molaires $SiO_2/Al_2O_3$ élevés (J. Martens, J. Weitkamp, M. Tielen, P. Jacobs, Zeolites 4, 98 (1984)). Cette publication révèle clairement que, lors de ces réactions, l'acidité des zéolites est un facteur déterminant pour la vitesse de ces réactions. Les principaux produits obtenus sont des isomères d'alimentation et/ou des produits hydrocraqués. La répartition de ces deux groupes de produits détermine la sélectivité globale des zéolites. Au niveau du raffinage d'huiles, des rendements élevés en produits hydrocraqués indiquent que le catalyseur zéolitique possède d'excellentes propriétés pour le déparaffinage d'huiles lubrifiantes. Dans ce cas, les n-paraffines cireuses sont transformées en produits plus légers (gaz et composants d'essence). Lorsqu'un rendement élevé en isomères est obtenu, le catalyseur zéolitique peut être utilisé dans les applications visant à abaisser le point d'écoulement sans perte de produit de départ comme dans le cas précédent.

Le procédé suivant la présente invention, dans lequel on active un catalyseur choisi parmi les zéolites à forte teneur en silice, les organosilicates, les silices polymorphes cristallines et les zéolites désactivés par traitement à la vapeur d'eau, en traitant ce catalyseur thermiquement à l'aide de chlorure d'aluminium et d'un acide halohydrique, est caractérisé essentiellement par le fait qu'on fait agir sur le catalyseur du chlorure d'aluminium et de l'acide chlorhydrique, tous deux en phase gazeuse, à une température comprise entre environ 150 et 600°C dans un même réacteur et on élimine l'excès éventuel d'acide chlorhydrique gazeux à l'aide d'un gaz inerte.

Dans une forme de réalisation particulière du procédé suivant l'invention, on porte un mélange de catalyseur et de chlorure d'aluminium introduit dans le réacteur à une température propre à déshydrater le mélange dans un courant d'un gaz inerte, puis on introduit dans le réacteur un courant d'un gaz inerte contenant

- 5 -

0181663

de l'acide chlorhydrique à l'état gazeux et on chauffe le réacteur à une température d'environ 500 à 600°C pendant plusieurs heures.

Selon une particularité du procédé suivant l'invention, on introduit un courant d'un gaz inerte contenant de l'acide chlorhydrique gazeux dans le réacteur chargé du mélange déshydraté de catalyseur et de chlorure d'aluminium à une température d'environ 150°C et on élève la température du réacteur jusqu'à environ 500 à 600°C en l'espace de plusieurs heures pendant lesquelles on continue à y introduire ledit courant gazeux contenant de l'acide chlorhydrique.

Le courant de gaz inerte, tel que de l'azote, contient avantageusement environ 20 % d'acide chlorhydrique gazeux sec.

Les exemples suivants illustrent l'invention à titre non limitatif :

EXEMPLE 1 : PREPARATION, UTILISATION ET ANALYSE D'UNE SILICE CRISTALLINE

a) Préparation d'une silice cristalline

On a préparé une silice cristalline ayant un diffractogramme aux rayons X identique à celui de silicalite, au départ des deux solutions suivantes :

solution 1 : 5,3 g de NaOH dans 20 ml d'eau ;
5 g de $NH_4OH$ dans 10 ml d'eau ;
22 g de $SiO_2$ (aerosil) ;
800 ml d'une solution aqueuse 1N de bromure de tétrapropylammonium.

solution 2 : 500 g de glycérol.

La solution 1 a été ajoutée à la solution 2 en agitant vigoureusement et le mélange a été chauffé dans un autoclave à 150°C pendant 3 jours.

La silice cristalline obtenue a été ensuite calcinée à 500°C et chauffée sous reflux dans un excès centuple (100X) de chlorure d'ammonium et calcinée à nouveau à 450°C.

La silice cristalline obtenue présentait, sur une base anhydre, la composition molaire suivante :

$$(Al_2O_3)_1 \ (SiO_2)_{5000}$$

b) Transformation de n-décane sur la silice cristalline chargée de 1 % de platine métallique

2 g de la silice cristalline obtenue de la manière décrite ci-dessus en (a) a été imprégnée de 0,034 g de $Pt(NH_3)_4Cl$ dans 2 ml d'eau. Après séchage et calcination à 500°C, 750 mg de la poudre obtenue ont été pressés, broyés et tamisés.

500 mg de la fraction d'une granulométrie de 0,5 à 0,8 mm ont été chargés dans un réacteur tubulaire à flux continu, en vue d'être utilisés comme catalyseur.

Le catalyseur chargé dans le réacteur a été pré-réduit à l'aide d'hydrogène à 400°C et refroidi à 100°C. A cette température, on a fait passer du n-décane et de l'hydrogène sur le catalyseur dans un rapport molaire $H_2/C_{10}H_{24}$ de 20 et un débit spatial horaire en décane de 0,6 $h^{-1}$.

Après 3 heures, la transformation en isomères et produits hydrocraqués a été constatée par chromatographie gazeuse en capillaire.

On a ensuite élevé la température par paliers de 10°C et on a chaque fois déterminé la composition de l'effluent du réacteur.

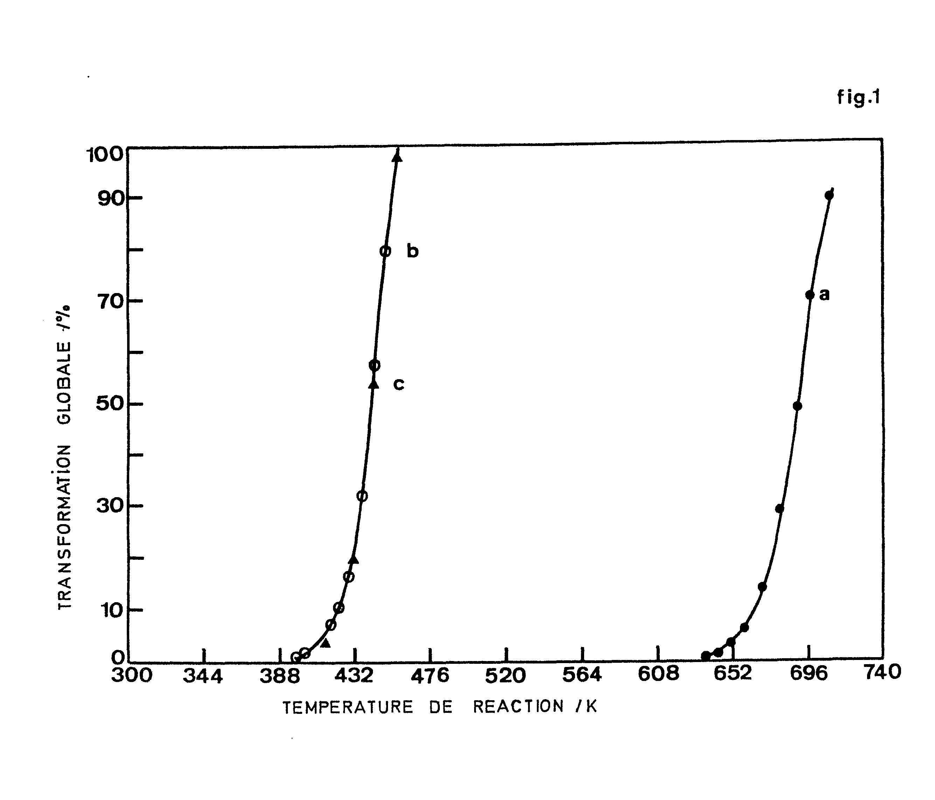

Les courbes de la figure 1 des dessins ci-annexés (dans laquelle la température de la réaction est indiquée en abscisse et la transformation globale en % est indiquée en ordonnée) montrent les résultats obtenus. Le degré de transformation du n-décane au contact du catalyseur de silice cristalline est indiqué en a à la figure 1. La teneur en isomère d'alimentation à différentes températures est montrée en b à la figure 1 et la quantité de produits hydrocraqués est donnée en c à la figure 1.

c) <u>Analyses de la silice cristalline</u>

On a déterminé le spectre NMR $^{27}$Al de la silice cristalline comme suit :

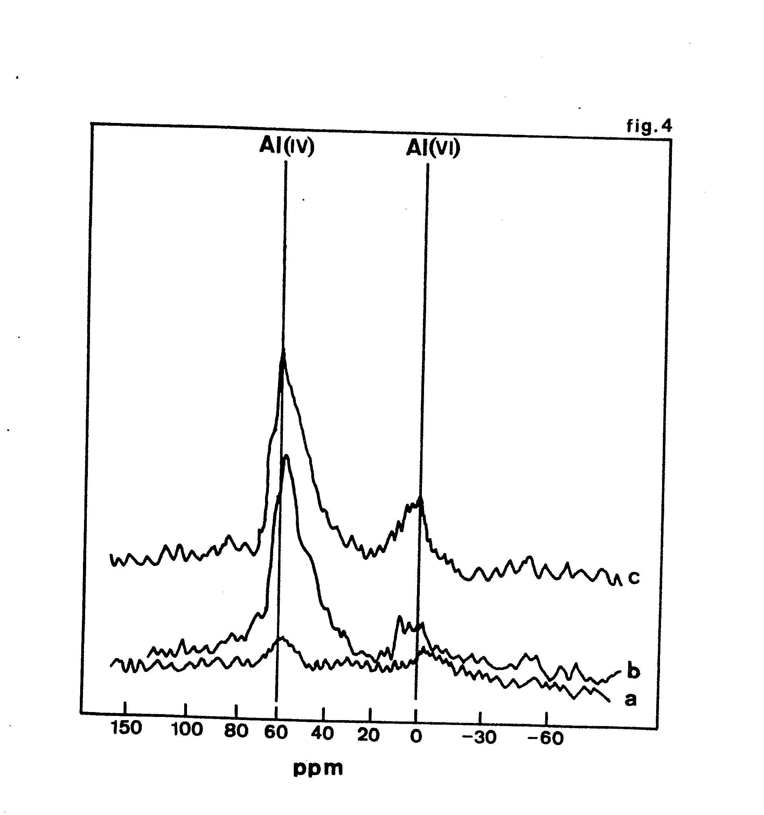

On a chargé 0,5 g de la poudre de silice cristalline restante du présent exemple 1 (a) dans le rotor d'un spectromètre NMR à résolution élevée de 400 MHz et le spectre NMR $^{27}$Al a été enregistré selon le mode de spinning à angle magique, en utilisant du $Al(H_2O)_6^{3+}$ comme référence. La ligne de résonnance $^{27}$Al du catalyseur à base de silice cristalline est montrée en A à la figure 4 des dessins ci-annexés. Le catalyseur ne contenait qu'une faible quantité d'aluminium tétraédrique (IV) et d'aluminium octaédrique (VI).

On a aussi déterminé le spectre infra-rouge des groupes OH superficiels de la silice cristalline comme suit :

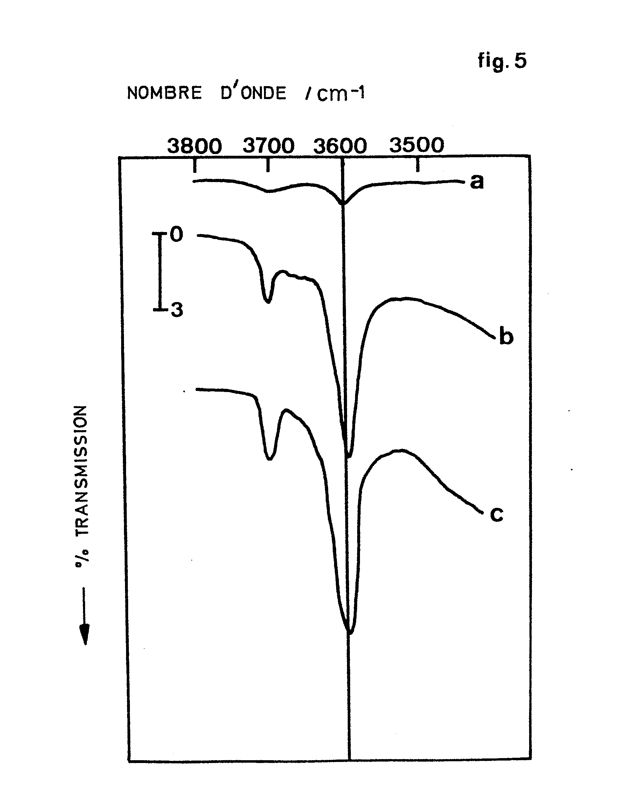

10 mg de la poudre de silice cristalline restante du présent exemple 1 (b) ont été pressés pour former une gaufrette auto-portante qui a été mise en suspension dans le porte-échantillon d'une cellule infra-rouge et dégazée à 400°C sous un vide de $10^{-5}$ bar. Le spectre de la région du plateau hydroxylique est montré en a à la figure 5 des dessins ci-annexés. On voit qu'il n'y a qu'une faible bande OH à 3600 cm$^{-1}$.

EXEMPLE 2 : <u>ACTIVATION DE LA SILICE CRISTALLINE DE L'</u>
<u>EXEMPLE 1 PAR LE PROCEDE SUIVANT L'INVENTION</u>
<u>ET UTILISATION DE CETTE SILICE CRISTALLINE</u>
<u>ACTIVEE</u>

a) <u>Procédé d'activation de la silice cristalline</u>

On a broyé 1 g de la silice cristalline préparée dans la partie (a) de l'exemple 1 avec 0,133 g de $AlCl_3.6H_2O$. Le mélange broyé a été chargé dans un réacteur tubulaire à flux continu semblable à celui utilisé dans la partie (b) de l'exemple 1. Le mélange chargé dans le réacteur a été chauffé à 500°C sous un courant d'azote sec à un débit de

0181663

60 ml/minute pour le déshydrater, après quoi on a refroidi la charge du réacteur jusqu'à 150°C. A ce stade, on a fait passer un courant gazeux contenant 20 % de HCl gazeux sec dans de l'azote sec dans le réacteur que l'on a chauffé à 550°C en l'espace de 5 heures. Pendant toute cette période, on a continué à faire passer le courant d'azote chargé de HCl.

Le réacteur a enfin été purgé à l'aide d'azote sec pour éliminer l'excès de HCl et refroidi. On a ainsi obtenu de la silice cristalline activée.

b) Transformation de n-décane sur de la silice cristalline activée imprégnée de 1 % de Pt métallique

On a utilisé la silice cristalline activée obtenue dans la partie (a) du présent exemple 2 de la manière décrite dans la partie (b) de l'exemple 1.

Les courbes b des figures 1, 2 et 3 ci-annexées permettent de comparer l'activité catalytique de la silice cristalline activée selon l'exemple 2 (a) à celle de la silice cristalline non activée selon l'exemple 1 (a).

Cette comparaison révèle que la courbe de transformation globale est déplacée vers des températures bien plus basses, en sorte que des taux de conversion équivalents sont obtenus avec la silice cristalline activée par le procédé suivant l'invention (exemple 2a) à des températures inférieures de 250°C à celles appliquées avec la silice cristalline non activée. Il en est de même, comme on le voit aux figures 1, 2 et 3, pour les activités d'hydrocraquage et d'isomérisation respectives de la silice cristalline non activée et de la silice cristalline activée conformément à la présente invention.

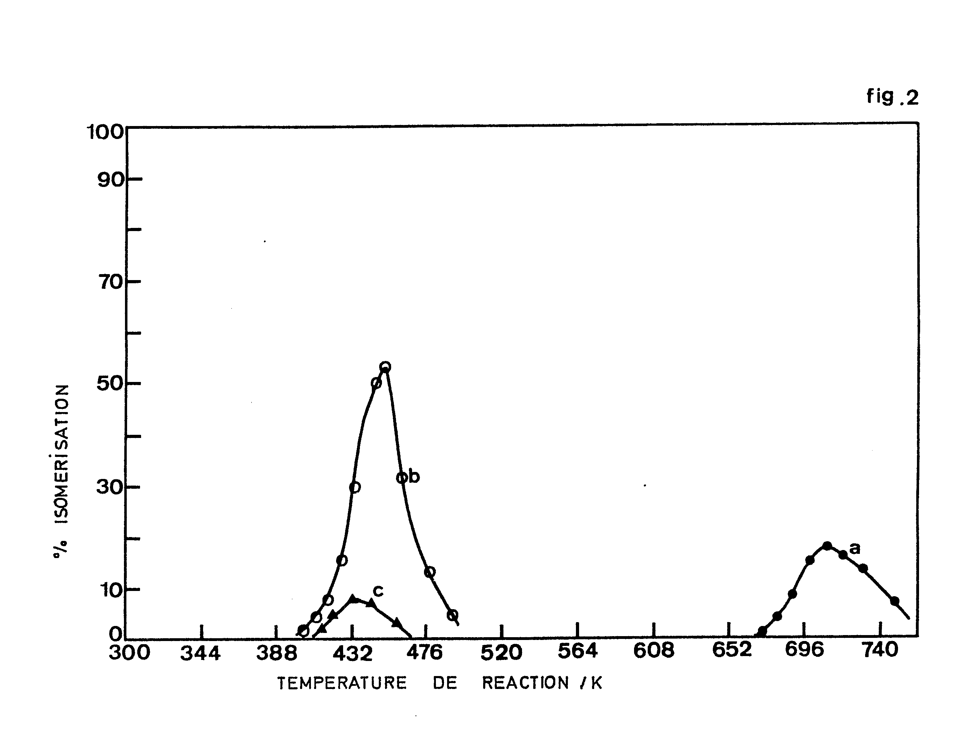

Le figure 2 révèle, en outre, que le rendement maximal en isomère a augmenté de 19 % (avec la silice cristalline non activée) à 59 % (avec la silice cristalline activée).

Les analyses suivantes auxquelles a été soumise la silice microcristalline activée par le procédé suivant l'invention dans l'exemple 2 (a) montrent des différences remarquables entre la silice cristalline non activée de l'exemple 1 (a) et la silice cristalline activée de l' exemple 2 (a).

Le spectre NMR $^{27}$Al de la silice cristalline activée de l'exemple 2 (a) déterminé de la manière décrite dans la partie c de l'exemple 1, au départ de 0,5 g de cette silice cristalline activée, est montré à la figure 4, tracé b. Ce tracé montre que la silice microcristalline activée contient une quantité considérable d'aluminium tétraédrique.

Par ailleurs, le spectre infra-rouge des groupes hydroxyle superficiels de la silice microcristalline déterminé, au départ d'un échantillon de 10 mg de cette silice, de la manière décrite dans la partie c de l'exemple 1, montre (voir la courbe b à la figure 5) que l'intensité de l'absorption dans la région des groupes OH à 3600 cm$^{-1}$ a augmenté considérablement, si on la compare à celle obtenue (voir courbe a à la figure 5) de la silice microcristalline non activée préparée dans l'exemple 1 (a).

EXEMPLE 3 : PREPARATION, UTILISATION ET ANALYSE D'UN ZEOLITE DE REFERENCE DU TYPE ZMS-5 AVEC UN RAPPORT MOLAIRE $SiO_2/Al_2O_3$ DE 40

a) Préparation d'un zéolite ZMS-5 de référence

On a préparé un zéolite du type ZMS-5 cristallin en ajoutant au mélange des solutions 1 et 2 de l'exemple 1(a) une troisième solution contenant 1,2 g de $Al(NO_3)_3.9H_2O$ dans 10 ml d'eau, en agitant vigoureusement. Le mélange obtenu a été ensuite traité de la manière décrite dans l'exemple 1 (a).

Le zéolite cristallin ainsi obtenu possédait un diffractogramme aux rayons X identique au zéolite ZMS-5 et avait la composition molaire suivante :

$$(Na_2O)_{0,05} (Al_2O_3)_1 (SiO_2)_{40}.$$

- 10 -

0181663

b) Transformation de n-décane sur le zéolite de référence ZSM-5

2 g du zéolite de référence ZSM-5 préparé dans la partie a du présent exemple ont été traités de la manière décrite dans l'exemple 1 (b) et du n-décane et de l'hydrogène ont été amenés à passer sur le catalyseur de la manière décrite dans l'exemple 1 (b).

Les courbes c des figures 1, 2 et 3 montrent l'activité catalytique du catalyseur à base du zéolite de référence ZSM-5 préparé dans la partie a du présent exemple.

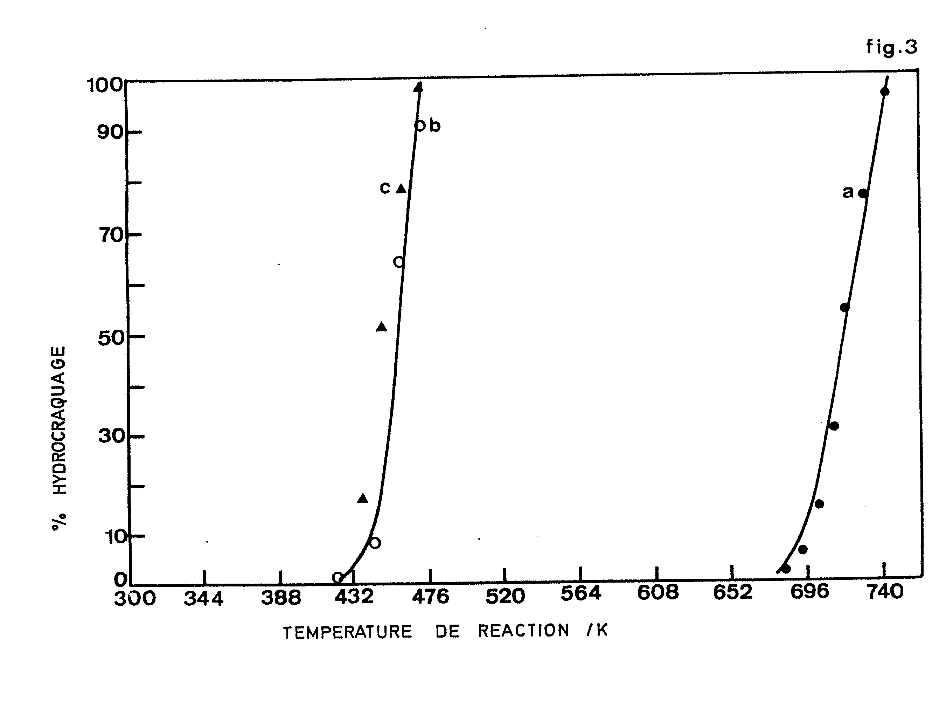

L'examen des figures 1 et 3 révèle que le zéolite de référence ZSM-5 du présent exemple et la silice cristalline activée par le procédé suivant l'invention (voir exemple 2 (a)) ont la même activité catalytique (courbes b et c) en ce qui concerne le taux de transformation globale du n-décane (figure 1) et le taux d'hydrocraquage (figure 3).

Cependant, en comparant les courbes b et c de la figure 2, on voit qu'en ce qui concerne le taux d'isomérisation, l'activité catalytique du zéolite de référence ZSM-5 (courbe c) est nettement inférieure à celle de la silice cristalline activée (courbe b) par le procédé suivant l'invention (exemple 2a).

Cette comparaison montre que lorsqu'on applique le procédé d'activation suivant la présente invention à une silice cristalline ayant un diffractogramme aux rayons X semblable à celui d'un zéolite du type ZSM-5, on obtient une silice cristalline activée dont les propriétés catalytiques sont supérieures à celles d'un zéolite ZSM-5 dans lequel le rapport molaire $SiO_2/Al_2O_3$ est de 40.

Ces constatations sont d'autant plus étonnantes que le spectre NMR $^{27}Al$ et le spectre infra-rouge des groupes OH superficiels du zéolite ZSM de référence susdit, montrés par les courbes c respectivement aux figures 4 et 5 sont les mêmes que ceux (courbes b) de la silice cristalline activée obtenue par le procédé suivant l'invention (exemple 2a), les spectres NMR et IR du zéolite de référence ZSM-5 ayant été déterminés respectivement au départ de 0,5 g et de 10 mg de ce zéolite ZSM-5 en opérant exactement de la manière décrite dans la partie c de l'exemple 1.

EXEMPLE 4 : PREPARATION, ACTIVATION, UTILISATION ET ANALYSE D'UN ZEOLITE DU TYPE ZSM-5 A RAPPORT $SiO_2/Al_2O_3$ DE 250

a) Préparation du zéolite ZSM-5

On a préparé un zéolite ZSM-5 ayant un rapport molaire $SiO_2/Al_2O_3$ de 250 en opérant de la manière décrite dans l'exemple 3 (a), si ce n'est que l'on a utilisé 0,2 g (au lieu de 1,2 g) de $Al(NO_3)_3.9H_2O$ dans 10 ml d'eau comme troisième solution.

b) Activation du zéolite ZSM-5 à rapport $SiO_2/Al_2O_3$ de 250

1 g du zéolite ZSM-5 préparé comme décrit dans la partie a du présent exemple a été activé par le procédé suivant l'invention, de la manière décrite dans l'exemple 2 (a).

c) Utilisation du zéolite ZSM-5 de l'exemple 4 (a) et du zéolite ZSM-5 activé de l'exemple 2 (b)

Ces deux zéolites ont été chacun séparément traités comme décrit dans l'exemple 1 (b) et utilisés comme catalyseurs pour la conversion de n-décane de la manière décrite aussi dans l'exemple 1 (b).

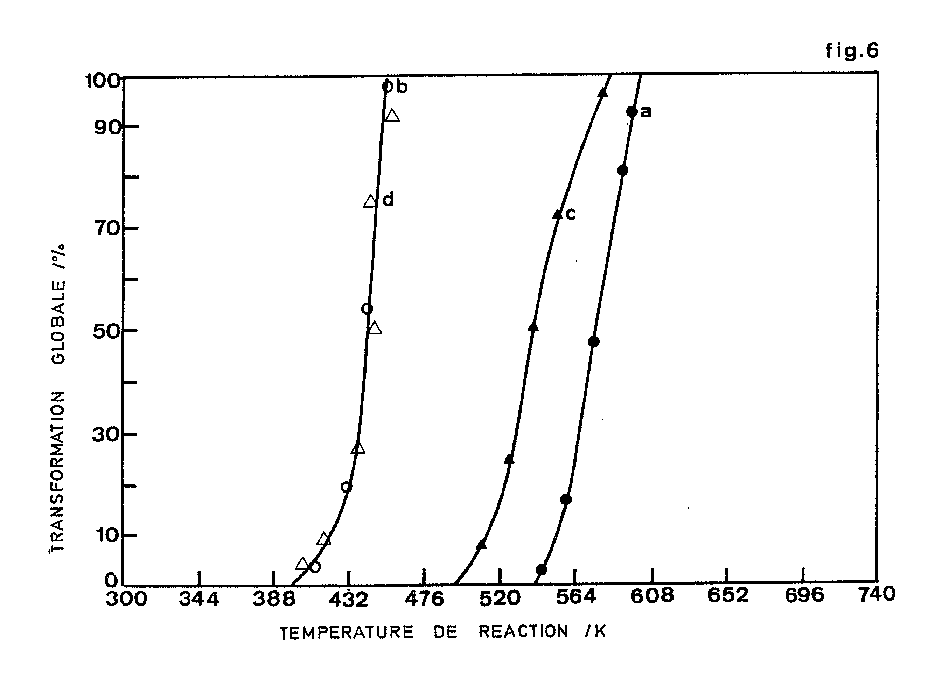

Le taux de transformation globale de n-décane est montré pour le catalyseur à base de zéolite ZSM-5 ($SiO_2/Al_2O_3$ = 250) non activé et pour le même catalyseur activé par le procédé suivant l'invention par les courbes de la figure 6. La courbe a de la figure 6 est celle relative au catalyseur à base dudit zéolite non activé, tandis que la courbe b concerne un catalyseur à base

- 12 -

0181663

du même zéolite activé par le procédé suivant l'invention. La figure 6 montre clairement que l'activité catalytique du zéolite ZSM-5 a été considérablement accrue par l'activation.

En comparant la courbe b de la figure 6 à la courbe c de la figure 1 (ces courbes étant identiques), on constate qu'un zéolite ZSM-5 ayant un rapport molaire $SiO_2/Al_2O_3$ initial de 250 possède, après activation par le procédé suivant la présente invention (exemple 4 b), la même activité catalytique qu'un zéolite ZSM-5 ayant un rapport $SiO_2/Al_2O_3$ de 40, soit un rapport bien moins élevé.

EXEMPLE 5 : ACTIVATION PAR LE PROCEDE DU BREVET U.S.A. N° 4.438.215 D'UN ZEOLITE ZSM-5 ET UTILISATION DE CE ZEOLITE ACTIVE

a) Activation du zéolite ZSM-5

Le zéolite ZSM-5 préparé dans l'exemple 4 (a) a été activé par le procédé décrit dans le brevet U.S.A. n° 4.438.215, en opérant comme suit :

On a mélangé 1 g dudit zéolite ZSM-5 avec 0,133 g de $AlCl_3.6H_2O$. On a ensuite chauffé le mélange obtenu dans un courant d'azote sec à 500°C, puis on l'a purgé à cette température, refroidi, hydrolysé avec 50 ml d'eau, séché à l'air et calciné à nouveau à 540°C.

b) Transformation de n-décane sur le catalyseur de zéolite ZSM-5 activé par le procédé décrit dans le brevet U.S.A. n° 4.438.215

On a procédé exactement de la même manière qu'avec la silice cristalline dans l'exemple 1 (b).

La courbe c de la figure 6 montre l'activité catalytique pour la transformation du n-décane.

En comparant sur cette figure 6 les activités relatives du zéolite ZSM-5 non activé (courbe a de la figure 6), du même zéolite ZSM-5 activé par le procédé selon le brevet U.S.A. n° 4.438.215 (courbe c de la figure 6) et du même zéolite ZSM-5 activé par le procédé suivant la présente invention (courbe b de la figure 6), on voit que le zéolite ZSM-5 activé conformément à la présente invention (exemple 5 a) a une activité catalytique nettement meilleure.

Etant donné que, dans le procédé selon le brevet U.S.A. n° 4.438.215, l'hydrolyse du mélange constitue une étape clef du procédé d'activation des zéolites, on a effectué un essai visant à déterminer si, dans le procédé suivant la présente invention, une phase d'hydrolyse permettrait d'augmenter encore l'activité catalytique des zéolites.

A cette fin, le zéolite ZSM-5 activé de la manière décrite dans l'exemple 5 (a) (conformément à la présente invention) a été hydrolysé dans 50 ml d'eau à la température ambiante.

L'activité catalytique du zéolite ZSM-5 activé ainsi hydrolysé a été déterminée en utilisant ce dernier zéolite pour la transformation de n-décane de la manière décrite dans l'exemple 1 (b).

La courbe d de la figure 6 montre l'activité catalytique du zéolite ZSM-5 activé et hydrolysé. Cette courbe d se confond avec la courbe b relative à l'activité catalytique du même zéolite ZSM-5 activé, mais non hydrolysé (exemple 5 b). Ceci montre que la phase d'hydrolyse à l'eau du zéolite activé est inutile, puisqu'elle n'améliore pas l'effet catalytique du zéolite activé.

EXEMPLE 6 : ACTIVATION D'UN ZEOLITE PREALABLEMENT DESACTIVE ET COMPARAISON D'ACTIVITES CATALYTIQUES

a) Désactivation d'un zéolite ZSM-5

On a utilisé le zéolite ZSM-5 de référence préparé dans l'exemple 3 (a) pour transformer du méthanol en essence.

A cette fin, on a fait passer, dans le réacteur tubulaire de l'exemple 1 (b), du méthanol sur 3 g du catalyseur (zéolite ZSM-5 de référence) à 500°C et à un débit VSHW de 20 h$^{-1}$. La transformation du méthanol était initialement de 100 %. Après 150 heures d'utilisation, le catalyseur était complètement désactivé, la transformation du méthanol étant tombée à 12 % seulement.

Le catalyseur a alors été déchargé du réacteur et calciné à l'air à 600°C.

b) Transformation de n-décane à l'aide du catalyseur désactivé

Une première fraction du catalyseur de référence ZSM-5 désactivé a été imprégnée d'un sel de platine et utilisée pour la transformation de n-décane de la manière décrite dans l'exemple 1 (b).

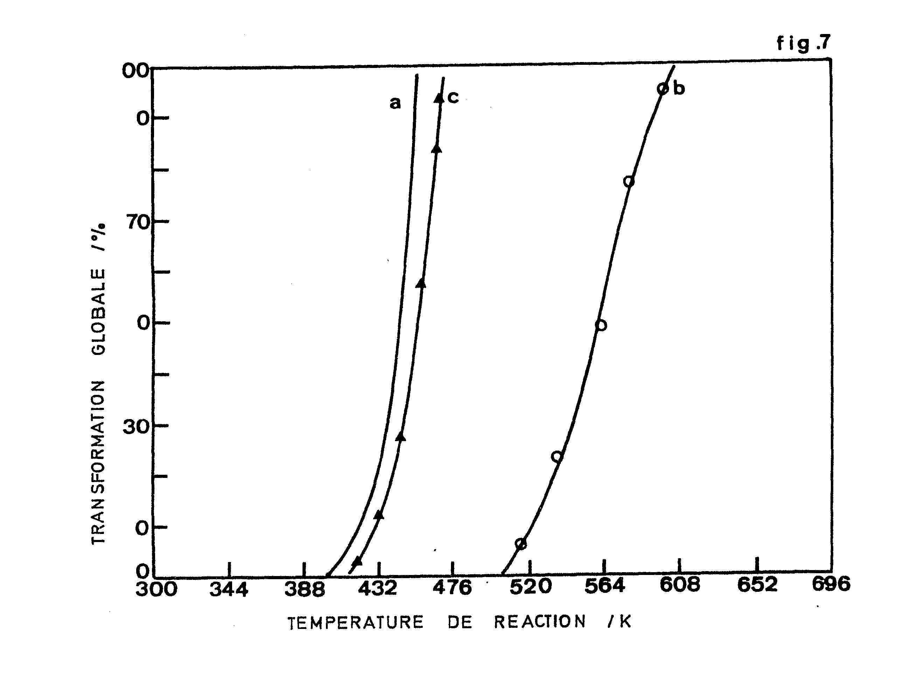

La courbe b de la figure 7 montre l'activité catalytique dudit catalyseur désactivé, en termes de taux de conversion globale du n-décane, en fonction de la température.

A la figure 7, la courbe a montre, à titre comparatif, l'activité de base du catalyseur ZSM-5 de référence.

c) Activation du catalyseur zéolite ZSM-5 par le procédé suivant l'invention

Une seconde fraction (1 g) du catalyseur de référence ZSM-5 désactivé calciné a été re-activée par le procédé suivant la présente invention, en la mélangeant avec 0,050 g de AlCl$_3$.6H$_2$O et en chauffant le mélange dans un courant d'azote contenant de l'acide chlorhydrique, comme décrit dans l'exemple 2 (a).

d) Transformation de n-décane à l'aide du catalyseur reactivé obtenu en c

On a utilisé le catalyseur re-activé obtenu en c dans le présent exemple pour transformer du n-décane de la manière décrite dans l'exemple 1 (b).

La courbe c de la figure 7 montre l'activité catalytique exprimée par les taux de transformation globale

- 15 -

0181663

du n-décane en fonction de la température.

La comparaison des courbes a, b et c de la figure 7 révèle que l'activité initiale d'un zéolite ZSM-5 désactivé par la réaction de transformation de méthanol en essence ne peut pas être complètement régénérée en éliminant le coke formé sur le catalyseur, de manière classique, par calcination, alors qu'une telle régénération est possible par le procédé suivant la présente invention.

EXEMPLE 7 : PREPARATION, ACTIVATION ET UTILISATION D'UN ZEOLITE ZSM-11

a) Synthèse de zéolite ZSM-11 avec un rapport molaire $SiO_2/Al_2O_3$ de 900

A une solution de silicate de sodium contenant 10,68 % de $Na_2O$, 27,72 % de $SiO_2$ et 61,60 % d'eau, on a ajouté 2,1 g de chlorure de tétrabutylphosphonium dissous dans 38 ml d'eau.

A la solution obtenue, on a ajouté successivement et en agitant vigoureusement 0,02 g d'aluminate de sodium dissous dans 50 g d'eau et 1 ml d'acide sulfurique concentré.

On a obtenu un gel que l'on a chauffé à 160°C pendant 24 heures dans un autoclave.

La matière solide obtenue, présentant le diffractogramme aux rayons X du zéolite ZSM-11, a été lavée à l'eau, séchée, calcinée à 550°C, refroidie jusqu'à la température ambiante et chauffée au reflux dans un excès centuple (100X) d'une solution 1 molaire d'acétate d'ammonium.

Le zéolite ZSM-11 obtenu avait un rapport molaire $SiO_2/Al_2O_3$ de 500.

b) Activation du zéolite ZSM-11

On a activé 1 g du zéolite ZSM-11 préparé comme décrit ci-dessus par le procédé suivant l'invention, en suivant le mode opératoire décrit dans l'exemple 2 (a).

c) Transformation de n-décane sur du zéolite ZSM non activé et activé

On a utilisé le catalyseur de zéolite ZSM-11 non activé préparé en (a) et le catalyseur de zéolite ZSM-11 activé comme décrit en (b) pour la transformation de n-décane, selon le mode opératoire décrit dans l'exemple 1 (b).

On a constaté, lors de ces essais, que la température de réaction à laquelle 50 % du n-décane étaient transformés, était de 247°C lors de l'utilisation du catalyseur zéolite ZSM-11 non activé et de 177°C lors de l'utilisation du même catalyseur activé de la manière décrite en (b) dans le présent exemple.

Ces constatations indiquent que le procédé d'activation suivant la présente invention augmente considérablement l'activité catalytique pour la transformation du n-décane, puisque la température à laquelle 50 % du n-décane sont transformés est inférieure de 70°C avec le zéolite ZSM-11 activé à la température nécessaire avec le même zéolite non activé.

EXEMPLE 8 : PREPARATION, ACTIVATION ET UTILISATION D'UN ZEOLITE ZSM-48

a) Synthèse d'un zéolite ZSM-48 ayant un rapport $SiO_2/Al_2O_3$ de 450

A 20 g de la solution de silicate de sodium de l'exemple 7 (a), on a ajouté successivement, en agitant vigoureusement, 4,2 g de bromure de tétraméthylammonium, 1 g d'acide sulfurique concentré et 0,04 g de $Al(NO_3)_3.9H_2O$ dans 20 ml d'eau.

Le gel obtenu a été chauffé à 150°C en autoclave pendant 2 jours et la matière solide obtenue, qui avait le diffractogramme du zéolite ZSM-48, a ensuite été traitée de la manière décrite dans l'exemple 7 (a).

b) Activation du zéolite ZSM-48

On a activé 1 g du zéolite ZSM-48 préparé en (a) par le procédé suivant l'invention, dans les conditions et suivant le mode opératoire décrits dans l'exemple 2 (a).

c) Transformation de n-décane sur du zéolite ZSM-48
non activé et activé

On a procédé à des essais comparatifs de transformation de n-décane sur du zéolite ZSM-48 non activé et
sur le même zéolite activé comme décrit en (b) dans le
présent exemple.

Ces essais ont montré que les températures
auxquelles 50 % de n-décane sont transformés sont respectivement de 267°C avec le ZSM-48 non activé et de 217°C
avec le ZSM-48 activé. Ceci démontre que le procédé suivant
l'invention permet aussi d'activer les catalyseurs du type
ZSM-48 à forte teneur en silice.

EXEMPLE 9 : ACTIVATION D'UN ZEOLITE TRAITE A LA VAPEUR
                D'EAU

On a traité 2 g du zéolite de référence ZSM-5
préparé dans l'exemple 3 (a) par de la vapeur d'eau sous
1 atmosphère à une température de 750°C.

Le zéolite traité à la vapeur a été ensuite
préparé pour servir de catalyseur et il a été testé dans
un essai de transformation de n-décane dans les conditions
décrites dans l'exemple 1 (b).

La température à laquelle 50 % du n-décane avaient
été transformés était de 210°C.

Une autre fraction du même zéolite traité à la
vapeur d'eau a été activée par le procédé suivant la
présente invention, en opérant de la manière décrite dans
l'exemple 2 (a) pour la silice cristalline.

Le zéolite activé obtenu a été soumis à un essai
d'utilisation comme catalyseur pour la transformation de
n-décane dans les conditions décrites plus haut (exemple
1 b).

La température à laquelle 50 % du n-décane ont
été transformés sur le catalyseur à base de zéolite de
référence ZSM-5 traité à la vapeur et activé conformément
à la présente invention était de 175°C.

**0181663**

On voit ainsi que le procédé suivant l'invention permet aussi d'activer notablement des zéolites préalablement désactivés par traitement à la vapeur d'eau.

REVENDICATIONS

1. Procédé d'activation de catalyseurs choisis parmi les zéolites à forte teneur en silice, les organosilicates, les silices polymorphes cristallines et les zéolites désactivés par traitement à la vapeur d'eau, dans lequel on traite thermiquement un catalyseur de ce type à l'aide de chlorure d'aluminium et d'un acide halohydrique, caractérisé en ce qu'on fait agir sur le catalyseur du chlorure d'aluminium et de l'acide chlorhydrique, tous deux en phase gazeuse, à une température comprise entre environ 150 et 600°C dans un même réacteur et on élimine l'excès éventuel d'acide chlorhydrique gazeux à l'aide d'un gaz inerte.

2. Procédé suivant la revendication 1, caractérisé en ce qu'on porte un mélange de catalyseur et de chlorure d'aluminium introduit dans le réacteur à une température propre à déshydrater le mélange dans un courant d'un gaz inerte, puis on introduit dans le réacteur un courant d'un gaz inerte contenant de l'acide chlorhydrique à l'état gazeux et on chauffe le réacteur à une température d'environ 500 à 600°C pendant plusieurs heures.

3. Procédé suivant la revendication 2, caractérisé en ce qu'on broie le catalyseur avec le chlorure d'aluminium pour former un mélange homogène que l'on introduit dans le réacteur.

4. Procédé suivant l'une quelconque des revendications précédentes, caractérisé en ce qu'on introduit un courant d'un gaz inerte contenant de l'acide chlorhydrique gazeux dans le réacteur chargé du mélange déshydraté de catalyseur et de chlorure d'aluminium à une température d'environ 150°C et on élève la température du réacteur jusqu'à environ 500 à 600°C en l'espace de plusieurs heures pendant lesquelles on continue à y

- 20 -

0181663

introduire ledit courant gazeux contenant de l'acide chlorhydrique.

5. Procédé suivant l'une quelconque des revendications précédentes, caractérisé en ce que le courant de gaz inerte chargé d'acide chlorhydrique gazeux contient environ 20 % d'acide chlorhydrique gazeux sec.

6. Procédé suivant l'une quelconque des revendications précédentes, caractérisé en ce qu'on utilise de l'azote comme gaz inerte.

7. Procédé suivant l'une quelconque des revendications précédentes, caractérisé en ce qu'on chauffe le réacteur jusqu'à une température de 500 à 600°C en l'espace d'environ 5 heures pendant que l'on y fait passer le courant de gaz inerte contenant de l'acide chlorhydrique gazeux à travers la charge de catalyseur et de chlorure d'aluminium.

8. Procédé suivant l'une quelconque des revendications précédentes, caractérisé en ce qu'on utilise un réacteur tubulaire à flux continu de gaz.

fig.1

TRANSFORMATION GLOBALE ·/%

TEMPERATURE DE REACTION /K

0181663

fig .2

2/2

0181663

fig.3

3/7

0181663

fig. 4

fig. 5

fig.6

TRANSFORMATION GLOBALE /%

TEMPERATURE DE REACTION /K

0181663

fig .7

TRANSFORMATION GLOBALE /%

TEMPERATURE DE REACTION / K

7/7

0181663

0181663

**RAPPORT DE RECHERCHE EUROPEENNE**

Office européen
des brevets

Numero de la demande

EP  85 20 1720

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A,D | US-A-4 438 215  (R.M. DESSAU et al.) <br> * Colonne 4, lignes 45-59 * | 1 | B 01 J  29/06 <br> B 01 J  29/38 |
| A | EP-A-0 114 726  (MOBIL OIL) <br> *  Page  3, paragraphe 2; page 5, paragraphe 5 * | 1 | |
| A | US-A-3 644 220  (K.K. KEARBY) <br> *  Colonne  3,  lignes  57-63; colonne 7, lignes 23-30 * | 1,3 | |
| A | US-A-4 361 713  (W.W. KAEDING) <br> * Colonne 13, lignes 43-54 * | 1 | |

DOMAINES TECHNIQUES RECHERCHES (Int. Cl.4)

B 01 J
C 10 G

Le présent rapport de recherche a été établi pour toutes les revendications

| Lieu de la recherche <br> LA HAYE | Date d'achèvement de la recherche <br> 07-02-1986 | Examinateur <br> KERRES P.M.G. |
|---|---|---|